# EUROPÄISCHE PATENTSCHRIFT

(11) **EP 2 590 831 B1**
(45) Veröffentlichungstag und Bekanntmachung des Hinweises auf die Patenterteilung: **16.04.2014**
(21) Anmeldenummer: 11722457.6
(22) Anmeldetag: 01.06.2011
(51) Int. Cl.: B60G 3/06, B60G 7/00, B60G 11/06, B60G 11/08, B60G 13/00, B60T 1/06, B62D 7/18, F16D 55/00

(54) **DÄMPFERBEIN-ACHSE DER EINGELENK-BAUART**
ONE-LINK TYPE DAMPER STRUT AXLE
JAMBE DE SUSPENSION

(30) Priorität: 07.07.2010 DE 102010031054
(43) Veröffentlichungstag der Anmeldung: 15.05.2013
(73) Patentinhaber: Bayerische Motoren Werke Aktiengesellschaft, 80809 München (DE)
(72) Erfinder: SEETHALER, Ludwig, 85241 Hebertshausen (DE); SCHMIDT, Roland, 82131 Stockdorf (DE); GLANZER, Michael, 80336 Muenchen (DE)
(74) Vertreter: Schmidt, Günter H. H.
(86) Internationale Anmeldenummer: PCT/EP2011/059027
(87) Internationale Veröffentlichungsnummer: WO 2012/004061

(56) Entgegenhaltungen:
- EP-A1- 0 402 777
- EP-A1- 0 488 376
- DE-A1- 1 555 234
- DE-A1- 2 927 486
- DE-A1- 3 012 873
- DE-A1- 3 539 054
- DE-A1- 3 931 868
- DE-A1- 19 721 878
- DE-A1-102009 014 879
- FR-A1- 2 700 591
- US-A- 4 526 249
- US-A1- 2005 056 497
- US-A1- 2007 144 839

## Beschreibung

Die Erfindung betrifft eine Dämpferbein-Achse der Eingelenk-Bauart für ein Kraftfahrzeug, insbesondere für einen Personenkraftwagen, mit einem das Rad und eine mit diesem bezüglich der Rad-Drehachse drehfest verbundene Bremsscheibe tragenden Radträger oder Schwenklager, an welchem das mit seinem anderen Ende am Fahrzeug-Aufbau abgestützte Dämpferbein befestigt ist und der/das weiterhin über ein nahe der Radmitten-Ebene liegendes Traggelenk durch einen unteren, funktional einen Dreieckslenker darstellenden Querlenker und weiterhin durch eine Spurstange geführt ist. Zum technischen Umfeld wird insbesondere auf die DE 30 12 873 A1 verwiesen, daneben auf die DE 197 21 878 A1, auf die DE 29 27 486 A und auf die nicht vorveröffentlichte deutsche Patentanmeldung 10 2009 014 879.5.

An Achskonstruktionen von höherwertigen Fahrzeugen werden hohe Anforderungen im Hinblick auf Fahrdynamik und Fahrkomfort gestellt. Für angetriebene Vorderachsen wird daher zumeist eine Federbeinachse oder eine Doppelquerlenkerachse gewählt, die jedoch beide systembedingte Nachteile besitzen. So weist eine Federbeinachse eine relativ große Bauhöhe auf, während der Bauaufwand für Doppelquerlenkerachsen relativ hoch ist.

Günstiger können hier die sog. Dämpferbein-Achsen der sog. Eingelenk-Bauart sein, wobei jedoch an die Position des sog. Traggelenks, in welchem ein unten liegender Lenker (im Folgenden Querlenker genannt) mit dem sog. Schwenklager (falls es sich um eine Vorderachse mit lenkbaren Rädern handelt) oder dem sog. Radträger (falls es sich um eine Hinterachse handelt) verbunden ist, konstruktiv schwer umsetzbare Anforderungen gestellt werden. Wie in der eingangs erstgenannten DE 30 12 873 A1 richtig ausgeführt und begründet ist, sollte nämlich dieses dort als Radgelenk bezeichnete Traggelenk zumindest nahezu in der Radmittenebene möglichst tief liegen. In dieser Schrift ist dabei ein horizontaler, in Fahrzeug-Querrichtung gemessener Abstand zwischen dem Traggelenk und der Radmittenebene von nur 20 mm beispielhaft genannt.

Ein solch enger horizontaler in Fzg.-Querrichtung gemessener Abstand zwischen Traggelenk und Radmittenebene, der unter allen Beanspruchungsarten ein nur geringes störendes Biegemoment auf das Dämpferbein entstehen lässt, ist jedoch in der Realität mit den konventionell gestalteten bekannten Radaufhängungen bzw. Achskonstruktionen konstruktiv kaum erreichbar.

Hiermit soll daher eine Dämpferbeinachse nach dem Oberbegriff des Anspruchs 1 aufgezeigt werden (= Aufgabe der vorliegenden Erfindung), bei der das Traggelenk konstruktiv gut umsetzbar in nächster Nähe zur Radmitten-Ebene angeordnet sein kann, wobei ausdrücklich darauf hingewiesen sei, dass diese "nächste Nähe", d.h. der horizontale in Fahrzeug-Querrichtung gemessene Abstand nicht gleich den in der genannten Schrift angegebenen 20 mm sein muss, sondern durchaus im Bereich zwischen 0 mm und 40 mm liegen kann.

Zur Lösung dieser Aufgabe ist vorgesehen, dass die Bremsscheibe als Ring ausgebildet ist, durch den der Querlenker mit seinem mit dem Traggelenk verbundenen Abschnitt hindurch ragt. Vorteilhafte Aus- und Weiterbildungen sind Inhalt der Unteransprüche.

Erfindungsgemäß ist die Bremsscheibe abweichend von der bei Personenkraftwagen üblichen Bauart mit einem sog. Bremsscheibentopf ohne einen solchen Bremsscheibentopf ausgebildet und stellt somit - wie in der von Motorrädern bekannten Bauform - einen Ring dar, der in seinem äußeren Randbereich auf geeignete Weise mit dem Rad verbunden ist. Ein die Bremsbeläge tragender und diese im Bedarfsfall gegen die Bremsscheibe pressender Bremssattel umgreift dabei die Bremsscheibe von innen, d.h. von ihrem inneren Ring-Randbereich aus. Eine entsprechende mögliche Konstruktion einer solchen Radbaugruppe eines Kraftfahrzeugs ist in der eingangs weiterhin genannten, nicht vorveröffentlichten deutschen Patentanmeldung 10 2009 014 879.5 gezeigt.

Indem erfindungsgemäß das besagte Traggelenk in Fahrzeug-Querrichtung von der Mittenebene des Fahrzeug aus betrachtet außerhalb der Bremsscheibe liegt, kann das Traggelenk sehr nahe bei der Radmitten-Ebene angeordnet werden, da auf die Bremsscheibe bzw. deren (vorliegend nicht vorhandenen) Topf keine Rücksicht genommen werden muss. Dabei ist eine Anordnung der Bremsscheibe quasi innerhalb eines solchen Traggelenks eines Radträgers, d.h. zwischen Traggelenk und Fahrzeug-Mittenebene, bereits bekannt, vgl. bspw. die DE 15 55 234 A oder die EP 0 402 777 B, jedoch handelt es sich bei diesem Stand der Technik nicht um eine Dämpferbein-Achse der Eingelenk-Bauart und insbesondere ragt dabei kein Querlenker durch die Bremsscheibe hindurch, sondern es wird diese im bekannten Stand der Technik von Querlenkern außenseitig, d.h. über ihren äußeren Rand, umgriffen.

Die eingangs genannte eigentliche Anforderung, nämlich eine möglichst wenig Bauraum beanspruchende und insbesondere eine geringe Bauhöhe aufweisende Achse für Personenkraftwagen aufzuzeigen, kann mit einer erfindungsgemäßen Dämpferbein-Achse noch besser erfüllt werden, wenn als Tragfeder für die anteilige Abstützung des Fahrzeug-Aufbaus auf dem Rad ein zumindest teilweise in Fahrzeug-Querrichtung ausgerichtetes Blattfederelement vorgesehen ist, das einerseits am besagten Querlenker und andererseits direkt oder unter Zwischenschaltung eines Achsträgers indirekt am Fahrzeug-Aufbau abgestützt ist. Dabei ist die Verwendung einer Blattfeder als Tragfederelement für eine Dämpferbein-Achse bereits grundsätzlich bekannt, vgl. bspw. die eingangs genannte DE 197 21 878 A1.

Vorliegend wird weiterhin vorgeschlagen, dem auch als Querblattfeder bezeichneten Blattfederelement keine Radführungs-Funktion zu übertragen, so dass diese Querblattfeder als reiner Biegebalken mit parabellförmigen Querschnittsverlauf dimensioniert sein kann. In diesem Sinne ist das Blattfederelement mit dem Querlenker vorzugsweise gelenkig verbunden und mit seinem anderen Ende (am Fahrzeug-Aufbau oder an einem Achsträger) momentenfest abgestützt. Insbesondere zur Reduzierung des Gewichts kann das Blattfederelement dabei in Kunststoff, insbesondere einem Faserverbundwerkstoff, ausgeführt sein.

Je nach zur Verfügung stehendem Bauraum oder in Abhängigkeit von anderen Randbedingungen kann jedem Rad einer erfindungsgemäßen Achse eine eigene Querblattfeder zugeordnet sein, die insbesondere dann auch gegenüber der Fahrzeug-Querrichtung geneigt anteilig in Fahrzeug-Längsrichtung orientiert sein kann; alternativ kann jedoch für die beiden Räder der Achse auch ein gemeinsames einziges Blattfederelement vorgesehen sein. Im letzten Fall kann die Abstützung des gemeinsamen Blattfederelements gegenüber dem Fahrzeug-Aufbau derart ausgeführt sein, dass dieses Blattfederelement zumindest anteilig die Funktion eines Querstabilisators übernimmt, was bereits grundsätzlich bekannt ist, vgl. bspw. die eingangs genannte DE 29 27 486.

Wenn das in Draufsicht betrachtet vor einer Antriebswelle des Rades am Radträger/Schwenklager befestigte Dämpferbein in Fahrzeug-Querrichtung betrachtet ausgehend vom Radträger nach hinten und wie üblich zusätzlich nach innen geneigt ist, so kann mit funktional vorgegebener Länge des Dämpferbeins bzw. des Stoßdämpfers desselben aufgrund dieser quasi zweifachen Neigung eine weitere Reduktion der benötigten Bauhöhe erzielt werden, wie sich auch aus einem Ausführungsbeispiel der vorliegenden Erfindung ergibt, welches im weiteren beschrieben wird.

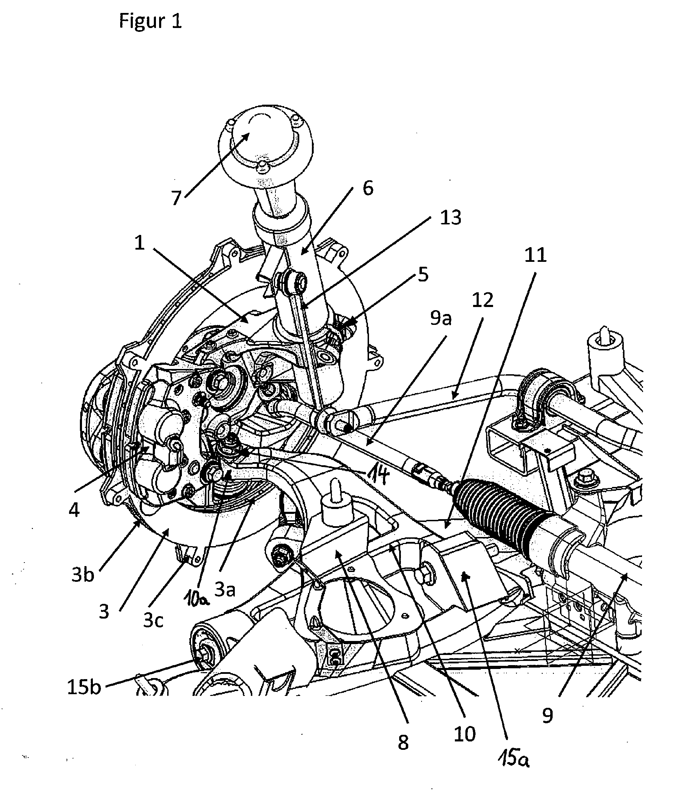

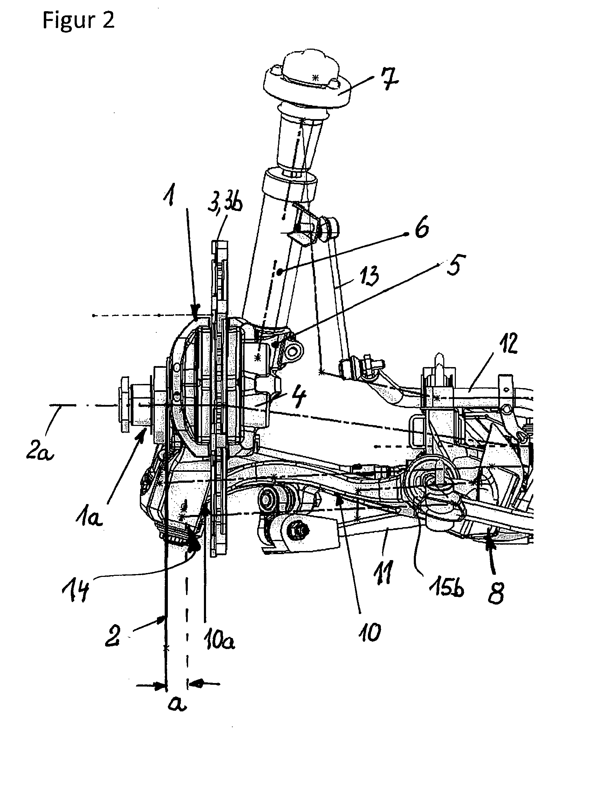

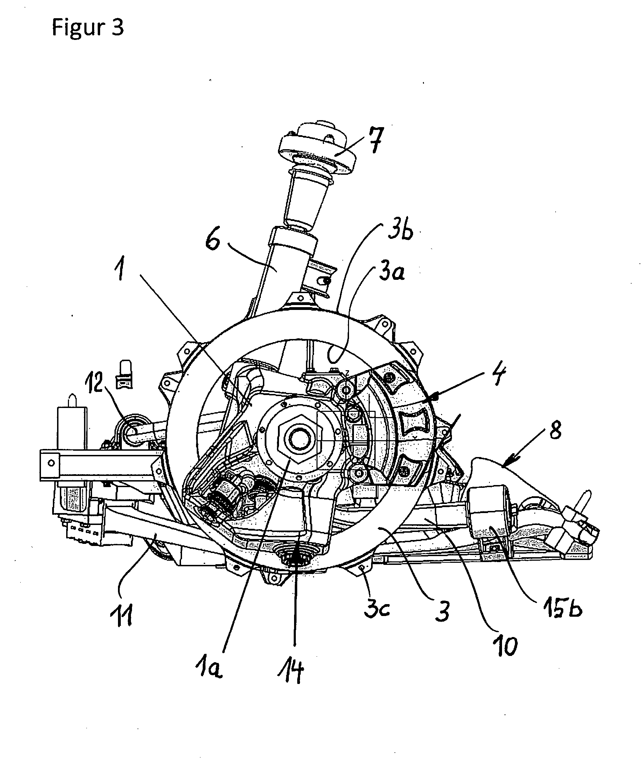

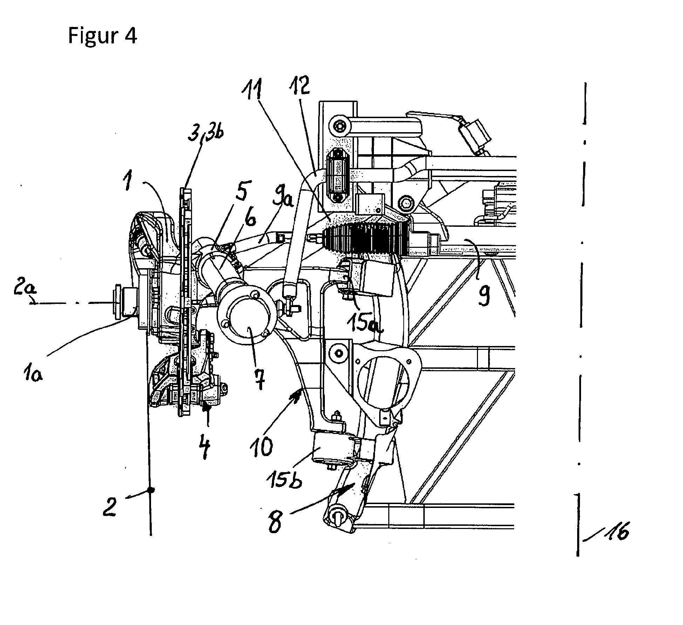

Dabei zeigt **Figur 1** in einer isometrischen Darstellung den linken Teil einer erfindungsgemäßen Vorderachse eines Personenkraftwagens mit weiteren teilweise nur bruchstückhaft dargestellten Elementen. **Figur 2** zeigt die Ansicht von vorne (gegen Fahrtrichtung betrachtet, **Figur 4** eine Draufsicht und **Figur 3** die Seitenansicht (in Fahrzeug-Querrichtung betrachtet).

Mit der Bezugsziffer 1 ist ein Schwenklager (oder Radträger) bezeichnet, das/der eine Nabe 1a aufweist, an der ein nicht dargestelltes Rad befestigt ist oder befestigt werden kann. Die zur Drehachse 2a dieses Rades senkrechte Radmitten-Ebene, die den Mittelpunkt bezüglich der Breite des Rad-Reifens enthält, ist mit der Bezugsziffer 2 gekennzeichnet (und selbstverständlich nur in den Figuren 2, 4 darstellbar). Mit dem besagten Rad drehfest verbunden und daher um die gleiche Drehachse 2a rotierend ist eine als Ring ausgebildete Bremsscheibe 3, die über ihren äußeren Randbereich 3b bzw. über an diesem vorgesehenen Laschen 3c am Rad bzw. an dessen Felge oder am Rand der sog. Radschüssel befestigt ist. Mit dieser Bremsscheibe 3 wirkt in an sich bekannter Weise ein Bremssattel 4 zusammen, der am Schwenklager 1 befestigt ist und der die ringförmige Bremsscheibe 3 von innen her, d.h. im Bereich von deren inneren Rand 3a umgreift.

An derjenigen Seite des Schwenklagers 1, die der sich in Fahrzeug-Längsrichtung sowie in Vertikalrichtung erstreckenden Fahrzeug-Mittenebene 16 zugewandt ist, ist ein Klemmsitz bzw. Klemmring 5 vorgesehen, über den in üblicher Weise ein Stoßdämpfer 6 bzw. Schwingungsdämpfer 6 am Schwenklager 1 befestigt ist, der ein sog. Dämpferbein (hierfür wird ebenfalls die Bezugsziffer 6 verwendet) bildet. In üblicher Weise ist dieses Dämpferbein 6 mit seinem dem Schwenklager 1 abgewandten Ende über ein sog. Stützlager 7 am nicht dargestellten Aufbau des Fahrzeugs bzw. Personenkraftwagens abgestützt und befestigt.

Ein Achsträger 8, an dem Komponenten der Vorderachse vormontiert werden oder sind, ist ebenfalls in bekannter Weise am Fahrzeug-Aufbau befestigt, bzw. genauer stützt sich der Vorderwagen des Fahrzeug-Aufbaus auf einem Achsträger 8 ab. Zu solchen vormontierten Komponenten gehört bspw. ein Lenkgetriebe 9 mit davon abgehender Spurstange 9a. Insbesondere jedoch gehört zu diesen vormontierten Komponenten ein Querlenker 10 für das Schwenklager 1 sowie - jedenfalls im Falle des vorliegenden Ausführungsbeispiels - eine Tragfeder 11, über welche der Fahrzeug-Aufbau indirekt, nämlich unter Zwischenschaltung des Achsträgers 8 und vorliegend - wie noch weiter erläutert wird - unter weiterer Zwischenschaltung des genannten Querlenkers 10, anteilig auf dem Schwenklager 1 und somit auf dem von diesem getragenen nicht dargestellten Rad abgestützt ist.

Beim vorliegenden Ausführungsbeispiel wird das Schwenklager 1 gegenüber dem Fahrzeug-Aufbau durch das Dämpferbein 6 und durch den Querlenker 10 und durch die Spurstange 9a geführt, der verbleibende Freiheitsgrad in Vertikalrichtung für die Ein- und Ausfederbewegung des Fahrzeug-Aufbaus gegenüber dem Rad ist durch die Tragfeder 11 festgelegt, welche selbst keine weitere Führungsfunktion übernimmt. Gleiches gilt im übrigen vorliegend auch für den Querstabilisator 12, der mit seinen beiden Enden jeweils über eine Pendelstütze 13 am Dämpferbein 6 bzw. am fest mit dem Schwenklager 1 verbundenen Gehäuse des Stoßdämpfers 6 abgestützt ist.

Der bereits genannte, in Vertikalrichtung betrachtet weit unten liegende Querlenker 10 stellt funktional einen Dreieckslenker dar und ist vorliegend teilweise sichelförmig geformt, wie am besten aus Fig. 1 hervorgeht. Mit seinem ersten End-Abschnitt 10a ist dieser Querlenker 10 über ein sog. Traggelenk 14 in Form eines Kugelgelenks mit dem Schwenklager 1 verbunden, während der andere Endabschnitt sowie ein mittlerer Abschnitt dieses Querlenkers 10 in dem Fachmann bekannter Weise über Lagerstellen 15a, 15b, die eine im wesentlichen horizontale und sich in Fzg.-Längsrichtung erstreckende Schwenkachse für den Querlenker 10 definieren, am Achsträger 8 angelenkt ist.

Wesentlich ist vorliegend die Lage des Traggelenks 14 in Relation zum nicht dargestellten Rad bzw. zur Radmitten-Ebene 2 und zur Bremsscheibe 3. Wie grundsätzlich bekannt, sollte jedenfalls an einer Dämpferbein-Achse dieses Traggelenk 14 zumindest nahezu in der Radmitten-Ebene 2 (oder allenfalls um ein geringes Maß in Fzg.-Querrichtung betrachtet von dieser beabstandet) und dabei möglichst tief innerhalb der sog. Radschüssel liegen. Die Radschüssel, welche vorliegend ebenso wie das Rad nicht dargestellt ist, ist ausgehend von der Rad-Drehachse 2a in Radialrichtung betrachtet durch den äußeren Rand 3b der Bremsscheibe 3 bestimmt, d.h. die auf dem in einer zur Radmitten-Ebene 2 parallelen Ebene liegenden Boden der Radschüssel senkrecht stehende Wand der Radschüssel liegt in Radialrichtung betrachtet zumindest annähernd im äußeren Ring-Randbereich 3b der Bremsscheibe 3.

Vorliegend ist diese gewünschte Position des Traggelenks 14 nun besonders gut dadurch darstellbar, dass der Querlenker 10 mit seinem über dieses Traggelenk 14 mit dem Schwenklager 1 verbundenen Abschnitt 10a oder Endbereich 10a durch die Bremsscheibe 2 hindurchgeführt ist, so dass dieser Abschnitt 10a des Querlenkers 10 in der Seitenansicht nach Fig. 3 von der Bremsscheibe 3 umringt ist. Von der Fahrzeug-Mittenebene 16 aus betrachtet liegt die Bremsscheibe 3 somit innerhalb des Traggelenks 14 des Schwenklagers 1 bzw. es befindet sich das Traggelenk 14 auf der der Fahrzeug-Mittenebene 16 abgewandten Seite der Bremsscheibe 3, wie besonders gut aus den Figuren 2, 4 hervorgeht. Der in Fzg.-Querrichtung gemessene Abstand a zwischen dem Traggelenk 14 (bzw. dessen Mittelpunkt) und der Radmittenebene 2, innerhalb derer im wesentlichen die Radaufstandskräfte wirken, kann somit minimal, bspw. in der Größenordnung von 20 mm gehalten werden, wodurch störende Biegemomente auf das Dämpferbein 6, die aus den Radaufstandskräften resultieren, minimiert werden.

Wie besonders gut aus Figur 3 hervorgeht, ist das Traggelenk 14 zusätzlich im wesentlichen in den tiefsten Punkt der Radschüssel gelegt bzw. liegt in Vertikalrichtung betrachtet im untersten Bereich der Bremsscheibe 3, wodurch ein leicht negativer Lenkrollradius realisierbar ist. Einem solchen förderlich ist auch die aus Fig.2 ersichtliche Schrägstellung des Dämpferbeins 6, welches im übrigen - wie Fig. 3 zeigt - ausgehend vom Schwenklager 1 nach hinten geneigt ist. Diese Neigung ermöglicht es auch, das Dämpferbein 6 in Draufsicht betrachtet vor einer hier nicht figürlich dargestellten, jedoch im wesentlichen in der Drehachse 2a des Rades liegenden Antriebswelle des Rades am Schwenklager 1 zu befestigen und somit in Vertikalrichtung betrachtet relativ tief liegend anzuordnen. Zusammen mit den beiden Neigungswinkeln des Dämpferbeins 6 kann somit dessen Stützlager 7 in Vertikalrichtung betrachtet ebenfalls relativ tief liegend vorgesehen sein, so dass eine niedrig liegende Fronthauben-Kontur des Fzg.-Aufbaus ermöglicht wird.

Die Tragfeder 11 ist als Blattfederelement (hierfür wird ebenfalls die Bezugsziffer 11 verwendet) ausgeführt, welches zumindest teilweise in Fzg.-Querrichtung ausgerichtet ist, vorliegend unter einem Winkel von ca. 30° in Fahrtrichtung nach vorne gepfeilt. Dieses Blattfederelement 11 ist einerseits am Querlenker 10 möglichst nahe am Schwenklager 1, vorliegend mangels verbleibendem Freiraum innerhalb der Bremsscheibe jedoch auf der der Fahrzeug-Mittenebene 16 zugewandten Seite der Bremsscheibe 3, und andererseits an einer geeigneten Stelle am Achsträger 8 abgestützt. Selbstverständlich ist auch eine hiervon abweichende Anordnung möglich, wie überhaupt eine Vielzahl von Details insbesondere konstruktiver Art abweichend von obigen Erläuterungen gestaltet sein kann, ohne den Inhalt der Patentansprüche zu verlassen.

Mit einer erfindungsgemäßen Dämpferbein-Achse lässt sich verglichen mit einer Federbeinachse eine in Vertikalrichtung betrachtet niedrigere Position des Stützlagers 7 und somit in diesem Bereich eine niedrigere Oberflächenkontur des Fahrzeug-Aufbaus ohne größeren Aufwand bei vergleichbarer Funktionalität realisieren. Verglichen mit einer Doppelquerlenkerachse zeichnet sich eine erfindungsgemäße Dämpferbein-Achse ebenfalls durch eine geringe Bauhöhe, insbesondere jedoch wegen einer nicht vorhandenen oberen Querlenkerebene durch einen reduzierten Bauaufwand und reduziertes Gewicht aus. Auch wird das Stützlager 7 durch die mögliche höhere Dämpferübersetzung und den Entfall der Tragfederkraft signifikant niedriger belastet. Damit sind in der Folge auch geringer dimensionierte Materialquerschnitte im Fzg.-Aufbau im Bereich des Stützlagers 7 möglich. Das bei einer Dämpferbein-Achse der Eingelenk-Bauart zum Einsatz kommende Eingelenk-Prinzip benötigt wegen geringerer Spurweiten-Änderung über dem Lenkwinkel vorteilhafterweise niedrigere Lenkleistungen. Eine demgegenüber erheblich aufwändigere sog. Zweigelenk-Lösung bspw. analog der eingangs genannten EP 0 402 777, die im Prinzip nur wegen des Bauraum-Konflikts zwischen der Bremsscheibe 3 und dem Traggelenk 14 geschaffen werden musste, wird mit der vorliegenden Erfindung, nämlich dass der Querlenker 10 mit seinem mit dem Traggelenk 14 verbundenen Abschnitt 10a durch die ringförmige und innenumgriffene Bremsscheibe 3 hindurch geführt ist, nicht weiter benötigt.

### Bezugszeichenliste:

- 1: Schwenklager (Radträger)
- 1a: Nabe
- 2: Radmitten-Ebene
- 2a: Drehachse des Rades
- 3: Bremsscheibe
- 3a: innerer Rand der Bremsscheibe 3 = innerer Ring-Randbereich
- 3b: äußerer Rand der Bremsscheibe 3 = äußerer Ring-Randbereich
- 3c: Laschen (an 3b)
- 4: Bremssattel
- 5: Klemmring, Klemmsitz
- 6: Stoßdämpfer bzw. Schwingungsdämpfer bzw. Dämpferbein
- 7: Stützlager
- 8: Achsträger
- 9: Lenkgetriebe
- 9a: Spurstange
- 10: Querlenker
- 10a: Endabschnitt von 10, der mit 1 bzw. 14 verbunden ist
- 11: Tragfeder = Blattfederelement
- 12: Querstabilisator
- 13: Pendelstütze für den Querstabilisator
- 14: Traggelenk (zwischen 1 und 10)
- 15a: Lagerstelle (von 10 an 8)
- 15b: Lagerstelle (von 10 an 8)
- 16: Fahrzeug-Mittenebene
- a: in Fzg.-Querrichtung gemessener Abstand zwischen 2 und 14

## Patentansprüche

1. Dämpferbein-Achse der Eingelenk-Bauart für ein Kraftfahrzeug, insbesondere für einen Personenkraftwagen, mit einem das Rad und eine mit diesem bezüglich der Rad-Drehachse drehfest verbundene Bremsscheibe (3) tragenden Radträger oder Schwenklager (1), an welchem das mit seinem anderen Ende am Fahrzeug-Aufbau abgestützte Dämpferbein (6) befestigt ist und der/das weiterhin über ein nahe der Radmitten-Ebene (2) liegendes Traggelenk (14) durch einen unteren, funktional einen Dreieckslenker darstellenden Querlenker (10) und weiterhin durch eine Spurstange (9a) geführt ist,
**dadurch gekennzeichnet, dass** die Bremsscheibe (3) als Ring ausgebildet ist, durch den der Querlenker (10) mit seinem mit dem Traggelenk (14) verbundenen Abschnitt (10a) hindurch ragt.

2. Dämpferbein-Achse nach Anspruch 1,
**dadurch gekennzeichnet, dass** als Tragfeder (11) für die anteilige Abstützung des Fahrzeug-Aufbaus auf dem Rad ein zumindest teilweise in Fahrzeug-Querrichtung ausgerichtetes Blattfederelement (11) vorgesehen ist, das einerseits am Querlenker (10) und andererseits direkt oder unter Zwischenschaltung eines Achsträgers (8) indirekt am Fahrzeug-Aufbau abgestützt ist.

3. Dämpferbein-Achse nach Anspruch 2,
**dadurch gekennzeichnet, dass** das Blattfederelement (11) mit dem Querlenker (10) gelenkig verbunden und mit seinem anderen Ende momentenfest abgestützt ist.

4. Dämpferbein-Achse nach einem der Ansprüche 2, 3,
**dadurch gekennzeichnet, dass** das Blattfederelement (11) in Kunststoff, insbesondere einem Faserverbundwerkstoff, ausgeführt ist.

5. Dämpferbein-Achse nach einem der Ansprüche 2 - 4,
**dadurch gekennzeichnet, dass** für die beiden Räder der Achse ein gemeinsames einziges Blattfederelement vorgesehen ist.

6. Dämpferbein-Achse nach Anspruch 5,
**dadurch gekennzeichnet, dass** die Abstützung des gemeinsamen Blattfederelements gegenüber dem Fahrzeug-Aufbau derart ausgeführt ist, dass dieses Blattfederelement zumindest anteilig die Funktion eines Querstabilisators übernimmt.

7. Dämpferbein-Achse nach einem der vorangegangenen Ansprüche **dadurch gekennzeichnet, dass** das in Draufsicht betrachtet vor einer
Antriebswelle des Rades am Radträger/Schwenklager (1) befestigte Dämpferbein (6) in Fahrzeug-Querrichtung betrachtet ausgehend vom Radträger/Schwenklager (1) nach hinten und wie üblich zusätzlich nach innen geneigt ist.

## Claims

1. A damper strut suspension of the single pivot construction for a motor vehicle, more especially for a passenger vehicle, with a wheel carrier or pivot bearing (1), which carries the wheel and a brake disc (3) that is non-rotatably connected thereto with respect to the rotational axis of the wheel and on which the damper strut (6) supported by its other end on the vehicle body is fastened and which wheel carrier/pivot bearing is furthermore guided by means of a supporting joint (14) located close to the wheel centre plane (2) by a lower transverse control arm (10) functionally representing a triangular control arm, and furthermore by a track rod (9a), **characterised in that** the brake disc (3) is configured as a ring, through which the transverse control arm (10) projects with its portion (10a) connected to the supporting joint (14).

2. A damper strut suspension according to claim 1, **characterised in that** a leaf spring element (11), which is at least partially oriented in the transverse direction of the vehicle, is provided as a bearing spring (11) for the proportional support of the vehicle body on the wheel, said leaf spring element, on the one hand, being supported on the transverse control arm (10) and, on the other hand, being supported directly, or with the interposition of an axle carrier (8) indirectly, on the vehicle body.

3. A damper strut suspension according to claim 2, **characterised in that** the leaf spring element (11) is connected in an articulated manner to the transverse control arm (10) and is fixedly supported with respect to torque by its other end.

4. A damper strut suspension according to either of claims 2 or 3, **characterised in that** the leaf spring element (11) is configured in plastics material, more especially a fibre composite material.

5. A damper strut suspension according to any one of claims 2 to 4, **characterised in that** a common single leaf spring element is provided for the two wheels of the axle.

6. A damper strut suspension according to claim 5, **characterised in that** the support of the common leaf spring element in relation to the vehicle body is configured in such a way that this leaf spring element at least proportionally takes on the function of a transverse stabiliser.

7. A damper strut suspension according to any one of the preceding claims, **characterised in that** the damper strut (6), which is fastened to the wheel carrier/pivot bearing (1), viewed in a plan view, in front of a drive shaft of the wheel, proceeding from the wheel carrier/pivot bearing (1), viewed in the transverse direction of the vehicle, is inclined to the rear and, as conventional, additionally inwardly.

## Revendications

1. °) Essieu à jambe de force amortissante de type articulée destiné à un véhicule, en particulier à une voiture particulière comportant un support de roue ou un palier pivotant (1) portant la roue et un disque de frein (3) relié solidairement à celle-ci relativement à son axe de rotation, sur lequel est fixé la jambe de force amortissante (6) qui s'appuie par son autre extrémité sur la carrosserie du véhicule, et qui est en outre transférée par une articulation support (14) située à proximité du plan médian de la roue (2) au travers d'un bras de suspension transversal inférieur (10) correspondant fonctionnellement à un bras de suspension triangulaire et en outre au travers d'une barre d'accouplement (9a), **caractérisé en ce que**
le disque de frein (3) est réalisé sous la forme d'un anneau au travers duquel s'étend le bras de suspension transversal (10) par son segment (10a) relié à l'articulation support (14).

2. °) Essieu à jambe de force amortissante conforme à la revendication 1, **caractérisé en ce qu'**
entant que ressort de suspension (11) pour permettre l'appui proportionnel de la carrosserie du véhicule sur la roue, il est prévu un élément de ressort à lame (11) orienté au moins partiellement dans la direction transversale du véhicule, qui s'appuie d'une part sur le bras de suspension transversal (10) et d'autre part sur la carrosserie du véhicule, ce directement, ou indirectement avec interposition d'un support d'essieu (8).

3. °) Essieu à jambe de force amortissante conforme à la revendication 2, **caractérisé en ce que**
l'élément de ressort à lame (11) est articulé sur le bras de suspension transversal (10) et s'appuie solidairement en couple par son autre extrémité.

4. °) Essieu à jambe de force amortissante conforme à l'une des revendications 2 et 3,
**caractérisé en ce que**
l'élément de ressort à lame (11) est réalisé en un matériau synthétique en particulier en un matériau composite à base de fibres.

5. °) Essieu à jambe de force amortissante conforme à l'une des revendications 2 à 4,
**caractérisé en ce qu'**
il est prévu un seul élément de ressort à lame commun aux deux roues de l'essieu.

6. °) Essieu à jambe de force amortissante conforme à la revendication 5, **caractérisé en ce que**
l'appui de l'élément de ressort à lame commun sur la carrosserie du véhicule est réalisé de sorte que cet élément de ressort à lame exerce au moins proportionnellement la fonction d'un élément de stabilisation transversal.

7. °) Essieu à jambe de force amortissante conforme à l'une des revendications précédentes,
**caractérisé en ce que**
la jambe de force amortissante (6) fixée sur le support de roue/palier pivotant (1) en avant de l'arbre d'entrainement de la roue considérée en vue de dessus, est inclinée vers l'arrière si l'on considère la direction transversale du véhicule à partir du support de roue/palier pivotant (1) et en outre classiquement vers l'intérieur.
